# FASCICULE DE BREVET EUROPEEN

(11) **EP 1 037 758 B1**
(45) Date de publication et mention de la délivrance du brevet: **09.10.2002**
(21) Numéro de dépôt: 99929499.4
(22) Date de dépôt: 16.07.1999
(51) Int. Cl.: B60J 10/00, B25B 27/00, B23P 19/04

(54) **BANDE AUTO-ADHESIVE CONSTITUANT PAR EXEMPLE UN JOINT POUR VEHICULE AUTOMOBILE**
SELBSTKLEBENDES BAND IN FORM BEISPIELSWEISE EINER DICHTUNG FÜR KRAFTFAHRZEUGE
SELF-ADHESIVE STRIP CONSTITUTING FOR EXAMPLE A JOINT FOR MOTOR VEHICLE

(30) Priorité: 21.07.1998 FR 9809292
(43) Date de publication de la demande: 27.09.2000
(73) Titulaire: AUTOMOBILES PEUGEOT, 75116 Paris (FR); AUTOMOBILES CITROEN, 92200 Neuilly-sur-Seine (FR)
(72) Inventeur: L'ANGEVIN, Bernard, F-35000 Rennes (FR)
(74) Mandataire: Thinat, Michel
(86) Numéro de dépôt international: FR9901753
(87) Numéro de publication internationale: WO00005087

(56) Documents cités:
- DE-A- 3 638 176
- DE-A- 3 808 443
- DE-U- 29 613 594
- US-A- 3 893 212
- US-A- 4 267 876

## Description

La présente invention a essentiellement pour objet une bande auto-adhésive qui peut constituer par exemple un joint de gouttière ou de jet d'eau pour un véhicule automobile quelconque.

L'expression « joint de jet d'eau » ou « joint de gouttière » désigne un joint destiné à être placé sur la carrosserie du véhicule au niveau de la partie supérieure de l'encadrement de porte et servant d'une part à éviter que l'eau ne ruisselle le long de la vitre ou ne pénètre à l'intérieur de l'habitacle et, d'autre part, à limiter les bruits aérodynamiques.

Les documents DE-A-36 38 176 et DE-A-38 08 443 décrivent un système permettant automatiquement le positionnement précis du joint et son application par pression sur l'élément devant recevoir ce joint.

Cependant, ces systèmes connus nécessitent des outils de maintien et de guidage du joint extrêmement complexes et coûteux.

Aussi, la présente invention a pour but de combler cette lacune.

A cet effet, l'invention a pour objet une bande auto-adhésive comprenant les caractéristiques énoncées dans la revendication 1.

L'excroissance précitée en forme de rail peut être solidaire de la première aile par l'intermédiaire d'au moins une portion amincie de matière permettant de séparer ladite excroissance de la première aile après pose de la bande.

Suivant encore un autre mode de réalisation de la bande selon cette invention, la première aile comporte un bord libre avec une lèvre, ou première lèvre, orientée du côté de la face auto-adhésive pour la masquer et un bord opposé qui comporte un talon et est raccordé à la deuxième aile par une charnière en retrait dudit talon.

Suivant un autre mode de réalisation de cette invention, la deuxième aile est raccordée sensiblement orthogonalement à la première aile par l'intermédiaire de la charnière précitée et présente une forme arquée à concavité tournée du côté de la face de la première aile qui porte l'excroissance précitée.

La deuxième aile comporte un évidement et se termine par un bord libre en forme de lèvre.

Suivant encore un autre mode de réalisation de la bande suivant cette invention, le bord libre de la première aile comporte une deuxième lèvre qui s'étend en regard de la deuxième aile, à l'opposé de la première lèvre précitée.

L'excroissance en forme de rail précitée peut présenter, en section transversale, une forme permettant son guidage, notamment une forme carrée, rectangulaire, triangulaire ou autre, susceptible de coopérer avec un outil ayant une forme correspondant à ladite excroissance. Cet outil peut être par exemple un galet à gorge ou un outil à main tel qu'une lissette présentant une échancrure de forme correspondant à ladite excroissance.

La face auto-adhésive de la première aile comporte un revêtement d'adhésif encastré dans ladite face et recouvert d'un ruban protecteur détachable.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en coupe transversale d'une bande auto-adhésive conforme à l'invention en position de repos.
La figure 2 est une vue similaire à la figure 1 mais montrant la bande en cours de montage et de fixation dans une feuillure, gouttière ou analogue.

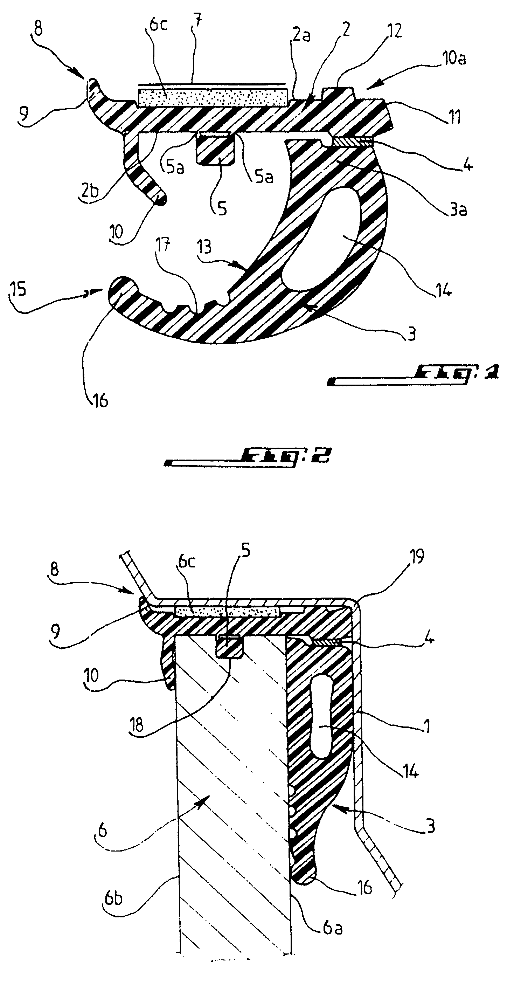

Comme on le voit notamment sur la figure 1, les bandes auto-adhésives conformes à l'invention présentent grossièrement, en section transversale, la forme d'un L dont l'une des branches est recourbée en direction de l'autre branche.

Cette bande est réalisée en une seule pièce par moulage ou extrusion et surmoulage en un ou plusieurs matériaux polymères appropriés et peut avoir de multiples usages dans l'industrie automobile, par exemple pour faire office de protection ou d'étanchéité à l'eau, à l'air, aux poussières et aux bruits. C'est ainsi que ladite bande peut constituer un joint de gouttière ou de jet d'eau autour des ouvertures latérales dans la caisse d'un véhicule automobile dont on a montré en 1 une partie formant feuillure dans laquelle sera fixée la bande.

On voit en 2 et 3 respectivement les deux branches ou ailes de la bande qui sont articulées l'une à l'autre par une partie 4 formant charnière.

L'une des ailes ou première aile 2 comporte une face extérieure auto-adhésive 2a, et, sur sa face opposée 2b, une excroissance 5 en forme de rail qui assure le guidage du joint par un outil 6 (figure 2) pour réaliser la fixation de la bande par pression et collage comme on le décrira en détail plus loin.

La face extérieure 2a de la première branche 2 comporte un revêtement d'adhésif 6c qui, comme on le voit bien sur la figure 1, est en quelque sorte encastré dans ladite face et est recouvert d'un ruban protecteur détachable 7.

L'excroissance en forme de rail 5 faisant saillie de la face opposée 2b de l'aile 2 de la bande vient de moulage avec celle-ci et peut être détachable (ou non) par arrachement après fixation de la bande dans la feuillure 1. Suivant l'exemple de réalisation représenté sur la figure 1, l'excroissance 5 présente, en section transversale, une forme sensiblement carrée et elle est reliée à l'aile 2 de la bande par des petits ponts ou parties amincies de matière 5a permettant de séparer l'excroissance ou rail 5 de la face 2b de l'aile 2 après pose de la bande, comme on le décrira ultérieurement.

La première aile 2 comporte en outre un bord libre 8 formant une lèvre ou première lèvre 9 orientée vers l'extérieur de la bande, c'est-à-dire du côté de la face auto-adhésive 2a, de façon à masquer ladite face. Le bord libre 8 de la branche ou aile 2 de la bande comporte encore une deuxième lèvre 10 ayant une fonction d'étanchéité et s'étendant à l'opposé de la première lèvre 9, c'est-à-dire en regard de la deuxième aile 3.

Le bord longitudinal 10a de la première aile 2, opposé au bord longitudinal libre 8, comporte, à son extrémité, un talon 11, qui, comme on le voit bien sur la figure 1, va quelque peu au-delà de la charnière 4 de raccordement de la première aile 2 à la deuxième aile 3, laquelle charnière est donc en retrait du talon 11. Ce talon permet avantageusement d'ajuster le positionnement de la bande dans la feuillure 1 lorsque la pose du joint est effectuée manuellement. On a encore montré en 12 une petite excroissance faisant saillie de la face 2a de l'aile 2 et constituant une butée d'appui de la bande dans la feuillure 1.

La deuxième aile 3 est raccordée par sa racine 3a sensiblement orthogonalement à la première aile 2 par l'intermédiaire de la charnière 4. Cette deuxième aile 3 présente une forme arquée à concavité 13 tournée du côté de la face 2b de la première aile 2 portant l'excroissance en forme de rail 5.

La deuxième aile 3 comporte un évidement longitudinal 14 destiné à améliorer la prise de rayon, c'est-à-dire à faciliter la déformation du joint dans les parties arrondies de la feuillure, et se termine par un bord libre 15 constituant une lèvre 16 susceptible d'assurer l'étanchéité en venant en contact avec la lèvre 10 lors de la fermeture de la porte (cette dernière n'étant pas représentée sur les dessins).

On a montré en 17 des encoches longitudinales internes pratiquées dans la deuxième aile 3 entre l'évidement 14 et la lèvre 16 et conférant une certaine souplesse au débattement de la lèvre 16 pour faciliter la fermeture de la porte. En effet, lors de la fermeture, celle-ci vient en contact avec l'extrémité libre de l'aile 3 et la pousse jusqu'à ce qu'elle soit en contact avec la lèvre 10.

Le positionnement et la fixation de la bande auto-adhésive qui vient d'être décrite seront maintenant brièvement expliqués en se reportant plus particulièrement à la figure 2.

Suivant l'exemple représenté, l'outil 6 de positionnement et de fixation par pression et collage de la bande dans la feuillure 1 est une molette, un galet ou analogue, entraîné en rotation par tout moyen approprié (non représenté) et comportant sur sa périphérie une gorge 18 ayant, en section transversale, une forme correspondant à celle du rail 5. Ainsi, la bande auto-adhésive pourra être très précisément positionnée dans la feuillure 1 par le galet 6 retenant ladite bande. On observera ici que l'aile arquée 3 articulée sur l'aile 2 par la charnière 4, sera en quelque sorte écartée de ladite aile 2 pour prendre appui contre l'une 6a des faces du galet, tandis que la deuxième lèvre 10 de la première aile 2 prendra appui sur l'autre face 6b du galet 6.

Bien entendu, le ruban protecteur 7 sera détaché avant l'application par pression de la bande dans la feuillure 1, et cela par roulement du galet 6 coopérant avec l'excroissance en forme de rail 5. La précision du positionnement de la bande auto-adhésive dans la feuillure 5 sera améliorée, en mode manuel, par le talon 11 coopérant avec le coin 19 de la feuillure 11.

On comprend donc de ce qui précède qu'en fin de compte, la bande sera fixée par le revêtement adhésif 6c sur la feuillure 1 grâce au roulement avec une pression suffisante du galet 6 sur ladite bande, ce après quoi le galet 6 sera retiré et l'aile 3, articulée par rapport à l'aile 2, reprendra sa position arquée visible sur la figure 1.

Enfin, l'excroissance en forme de rail 5 sera, suivant la réalisation représentée, détachée par arrachement depuis la face 2b de l'aile 2 de la bande, ce qui est de nature à faciliter l'adaptation de la bande à des opérations ultérieures éventuelles de montage.

On notera ici que, si dans l'exemple décrit ci-dessus, le positionnement et la fixation de la bande sont effectués à l'aide d'un galet entraîné en rotation, il est possible d'utiliser d'autres outils, par exemple un galet non entraîné en rotation ou un outil tel qu'une lissette présentant une échancrure de forme conjuguée de celle du rail 5.

On a donc réalisé suivant l'invention une bande auto-adhésive qui est, sur toute sa longueur, bien positionnée et fixée par collage dans par exemple une feuillure, sans risque de décollage, même à la longue, et permettant par conséquent d'assurer en tout point sur toute sa longueur ses fonctions de protection et d'étanchéité sur la caisse d'un véhicule automobile par exemple.

Bien entendu, l'invention n'est nullement limitée au mode de réalisation décrit et illustré qui n'a été donné qu'à titre d'exemple.

C'est ainsi qu'il est possible de prévoir une excroissance arrachable ou non sur l'aile 2 de la bande. De même, cette excroissance pourra avoir, en section transversale, une forme quelconque en fonction de la forme de l'outil recevant cette excroissance pour le guidage et la fixation de la bande.

C'est dire que l'invention comprend tous les équivalents techniques des moyens décrits, ainsi que leurs combinaisons si celles-ci sont effectuées suivant son esprit, pour autant que l'invention demeure définie par les revendications.

## Revendications

1. Bande auto-adhésive constituant par exemple un joint pour véhicule automobile, comprenant deux ailes (2,3) articulées l'une à l'autre par l'un de leurs bords longitudinaux et dont l'une, ou première aile (2), comporte une face auto-adhésive (2a), **caractérisée en ce que** la première aile (2) comporte sur sa face opposée (2b) à sa face auto-adhésive (2a), une excroissance en forme de rail (5) faisant saillie du côté de l'autre aile, ou deuxième aile (3), et permettant son guidage par un outil (6) comportant un évidemment (18) dans lequel s'engage l'excroissance (5) pour réaliser la fixation de la bande par pression.

2. Bande selon la revendication 1, **caractérisée en ce que** l'excroissance (5) en forme de rail est solidaire de la première aile (2) par l'intermédiaire d'au moins une portion amincie de matière (5a) permettant de séparer ladite excroissance de la première aile (2) après pose de la bande.

3. Bande selon la revendication 1 ou 2, **caractérisée en ce que** la première aile (2) comporte un bord libre (8) avec une lèvre, ou première lèvre (9), orientée du côté de la face auto-adhésive (2a) pour la masquer et un bord opposé (10a) qui comporte un talon (11) et est raccordé à la deuxième aile (3) par une charnière (4) en retrait dudit talon.

4. Bande selon la revendication 3, **caractérisée en ce que** la deuxième aile (3) est raccordée sensiblement orthogonalement à la première aile (2) par l'intermédiaire de la charnière précitée (4) et présente une forme arquée à concavité (13) tournée du côté de la face (2b) de la première aile (2) portant l'excroissance précitée (5).

5. Bande selon l'une des revendications précédentes, **caractérisée en ce que** la deuxième aile (3) comporte un évidement (14) et se termine par un bord libre (15) en forme de lèvre (16).

6. Bande selon la revendication 3, **caractérisée en ce que** le bord libre (8) de la première aile (2) comporte une deuxième lèvre (10) s'étendant en regard de la deuxième aile (3), à l'opposé de la première lèvre précitée (9).

7. Bande selon l'une des revendications précédentes, **caractérisée en ce que** l'excroissance en forme de rail précitée (5) présente, en section transversale, une forme permettant son guidage, notamment triangulaire, rectangulaire ou carrée susceptible de coopérer avec l'outil (6) présentant une gorge (18) ou une échancrure de forme correspondant à ladite excroissance.

8. Bande selon l'une des revendications précédentes, **caractérisée en ce que** la face auto-adhésive (2a) de la première aile (2) comporte un revêtement d'adhésif (6) encastré dans ladite face et recouvert d'un ruban protecteur détachable (7).

## Patentansprüche

1. Selbstklebendes Band in Form beispielsweise einer Dichtung für Kraftfahrzeuge mit zwei durch einen ihrer Längsränder umeinander artikulierten Flügeln (2, 3) und von denen einer, oder der erste Flügel (2), eine selbstklebende Seite (2a) umfasst, **dadurch gekennzeichnet, dass** der erste Flügel (2) auf seiner der selbstklebenden Seite (2a) gegenüberliegenden Seite (2b) eine Auswölbung in auf dem anderen Flügel oder zweiten Flügel (3) hervorstehenden Schienenform (5) umfasst, und die sein Führen durch ein Werkzeug (6) erlaubt, das eine Aussparung (18) umfasst, in der die Auswölbung (5) eingreift, um die Befestigung des Bandes durch Druck zu realisieren.

2. Band gemäß Anspruch 1, **dadurch gekennzeichnet, dass** die Auswölbung (5) in Schienenform fest mit dem ersten Flügel (2) mittels wenigstens eines Abschnitts aus verdünntem Material (5a) verbunden ist, das es erlaubt, die besagte Auswölbung des ersten Flügels (2) nach dem Anbringen des Bandes zu trennen.

3. Band gemäß Anspruch 1 oder 2, **dadurch gekennzeichnet, dass** der erste Flügel (2) einen freien Rand (8) mit einer Lippe oder ersten Lippe (9) umfasst, die auf der selbstklebenden Seite (2a) ausgerichtet ist, um sie zu verdecken, und einen gegenüberliegenden Rand (10a), der einen Absatz (11) umfasst und an den zweiten Flügel (3) durch ein Scharnier (4) angeschlossen ist, das von besagtem Absatz zurückspringt.

4. Band gemäß Anspruch 3, **dadurch gekennzeichnet, dass** der zweite Flügel (3) deutlich orthogonal zum ersten Flügel (2) mittels des vorgenannten Scharniers (4) angeschlossen ist und eine Bogenform mit einer zur Seite (2b) des ersten, die vorgenannte Auswölbung (5) tragenden Flügels (2) gerichteten Konkavität (13) aufweist.

5. Band gemäß einem der vorherigen Ansprüche, **dadurch gekennzeichnet, dass** der zweite Flügel (3) eine Aussparung (14) umfasst und durch einen freien Rand (15) in Lippenform (16) abgeschlossen wird.

6. Band gemäß Anspruch 3, **dadurch gekennzeichnet, dass** der freie Rand (8) des ersten Flügels (2) eine zweite Lippe (10) umfasst, die sich gegenüber des zweiten Flügels (3), gegenüber der vorgenannten ersten Lippe (9) erstreckt.

7. Band gemäß einem der vorherigen Ansprüche, **dadurch gekennzeichnet, dass** die vorgenannte Auswölbung in Schienenform (5) im Querschnitt eine ihr Führen erlaubende Form, insbesondere dreieckige, rechteckige oder quadratische Form aufweist, die geeignet ist, mit dem Werkzeug (6) zusammenzuarbeiten, das eine Auskehlung (18) oder einen Ausschnitt in der besagten Auswölbung entsprechenden Form aufweist.

8. Band gemäß einem der vorgenannten Ansprüche, **dadurch gekennzeichnet, dass** die selbstklebende Seite (2a) des ersten Flügels (2) eine selbstklebende Beschichtung (6) umfasst, die in der besagten Seite eingelassen und mit einem abnehmbaren Schutzband (7) überzogen ist.

## Claims

1. Self-adhesive strip constituting for example a joint for a motor vehicle and including two wings (2, 3) joined to each other by one of their longitudinal edges, one of said wings or first wing (2) comprising a self-adhesive face (2a), **characterised in that** the first wing (2) comprises on its face (2b) opposite its self-adhesive face (2a) a rail-shaped protuberance (5) projecting from the side of the other wing or second wing (3) and enabling it to be guided by a tool (6) comprising a recess (18) in which the protuberance (5) is engaged so as to embody fix the strip by means of pressure.

2. Strip according to claim 1, **characterised in that** the rail-shaped protuberance (5) is integral with the first wing (2) by means of at least one thinned material portion (5a) making it possible to separate said protuberance from the first wing (2) after placing of the strip.

3. Strip according to claim 1 or 2, **characterised in that** the first wing (2) comprises a free edge (8) with a lip or first lip (9) orientated on the self-adhesive face side (2a) so as to mask it and an opposing edge (10a) which comprises a heel (11) and is connected to the second wing (3) by a hinge (4) standing back from said heel.

4. Strip according to claim 3, **characterised in that** the second wing (3) is connected approximately orthogonal to the first wing (2) by means of said hinge (4) and has an arc shape with concavity (13) orientated from the side of the face (2b) of the first wing (2) bearing said protuberance (5).

5. Strip according to one of the preceding claims, **characterised in that** the second wing (3) comprises a recess (14) and ends by a free edge (15) with the shape of a lip (16).

6. Strip according to claim 3, **characterised in that** the free edge (8) of the first wing (2) comprises a second lip (10) extending opposite the second wing (3) opposite said first lip (9).

7. Strip according to one of the preceding claims, **characterised in that** said rail-shaped protuberance (5) has as a transversal section a shape, especially triangular, rectangular or square enabling it to be guided and able to cooperate with the tool (6) having a throat (18) or a groove with a shape corresponding to said protuberance.

8. Strip according to one of the preceding claims, **characterised in that** the self-adhesive face (2a) of the first wing (2) comprises an adhesive coating (6) embedded in said face and covered with a detachable protective strip (7).
